# EUROPEAN PATENT APPLICATION

(11) **EP 2 042 564 A1**
(43) Date of publication of application: **01.04.2009**
(21) Application number: 08015544.3
(22) Date of filing: 03.09.2008
(51) Int. Cl.: C09D 4/06

(54) **Photocurable coating composition, and overprint and process for producing same**

(30) Priority: 25.09.2007 JP 2007247863
(71) Applicant: FUJIFILM Corporation, Minato-ku Tokyo (JP)
(72) Inventor: Kakino, Ryuki, Haibara-gun Shizuoka (JP)
(74) Representative: HOFFMANN EITLE

(57) **Abstract**

A photocurable coating composition is provided that includes an ethylenically unsaturated compound having an alicyclic hydrocarbon group and a photopolymerization initiator. There are also provided a process for producing an overprint, the process including a step of obtaining a printed material by printing on a printing substrate, a step of coating the printed material with the photocurable coating composition, and a step of photocuring the photocurable coating composition, an overprint produced by the process, use of the photocurable coating composition for producing an overprint, and use of the photocurable coating composition for producing an overprint for an electrophotographically printed material.

## Description

The present invention relates to a photocurable coating composition, and to an overprint and a process for producing same. More particularly, the present invention relates to a photocurable coating composition that is curable upon exposure to actinic radiation such as an electron beam or UV rays. In particular, it relates to a photocurable coating composition for coating an image formed by depositing ink and/or toner on a printing substrate (image receiving substrate) by a method such as lithography, relief printing, intaglio printing, screen printing, inkjet, or electrophotography. More particularly, it relates to a photocurable overprint composition (overprint composition) particularly suitably used for coating a toner-based printed material printed by an electrophotographic process.

In recent years, a large number of actinic radiation curable compositions that can be used in UV curable printing inks, paints, and coatings have been developed, and the spreading thereof is currently being promoted. However, it is at present difficult to obtain a photocurable composition that satisfies all requirements in terms of curability, surface smoothness, strength, storage stability, etc.

In particular, when a layer of fuser oil is present on the surface of a toner-based image such as one obtained by an electrophotographic process, it is yet more difficult to obtain desired performance.

In a standard method for forming a toner-based image, such as an electrophotographic process, an electrostatic charge is formed on a latent image retaining surface by uniformly charging a latent image retaining surface such as, for example, a photoreceptor. Subsequently, charge on the uniformly charged region is selectively released by a pattern of activation irradiation corresponding to an original image. The latent image charge pattern remaining on the surface corresponds to regions that have not been exposed to radiation. Subsequently, the photoreceptor is passed through one or a plurality of development housings containing toner, and since the toner is deposited on the charge pattern by electrostatic attractive force, the latent image charge pattern is visualized. Subsequently, the developed image is either fixed on an image-forming surface or transferred to a printing substrate such as, for example, paper and fixed thereto by an appropriate fixation technique, thus giving an electrophotographically printed material, that is, a toner-based printed material.

As a known method for protecting a printed material, applying an overprint coating to the printed material has been proposed. For example, JP-A-11-70647 and JP-A-2003-241414 (JP-A denotes a Japanese unexamined patent application publication) propose a method such as an electrophotographic process, in which fixation is carried out after a transparent toner is transferred on top of a toner-based image, thus covering the surface.

Furthermore, JP-A-61-210365 proposes a method in which an overprint coating is applied by applying a liquid film coating that is curable by UV rays, etc. and polymerizing (crosslinking) a coating component by means of light.

Furthermore, JP-A-2005-321782 discloses an overprint composition comprising a radiation curable oligomer selected from the group consisting of trifunctional unsaturated acrylic resins, a radiation curable monomer selected from the group consisting of polyfunctional alkoxylated acrylic monomers and polyalkoxylated acrylic monomers, such as one type or a plurality of types of diacrylate or triacrylate, at least one type of photopolymerization initiator, and at least one type of surfactant.

It is an object of the present invention to provide a photocurable coating composition giving excellent surface smoothness, and an overprint having excellent non-tackiness and surface smoothness and a process for producing same by applying and curing the photocurable coating composition.

This object has been accomplished by means of (1), (8), or (9) below, which are described together with (2) to (7), which are preferred embodiments. (1) A photocurable coating composition comprising an ethylenically unsaturated compound having an alicyclic hydrocarbon group, and a photopolymerization initiator, (2) the photocurable coating composition according to (1) above, wherein the ethylenically unsaturated compound having an alicyclic hydrocarbon group is a monofunctional (meth)acrylate compound, (3) the photocurable coating composition according to (1) or (2) above, wherein it comprises a polyfunctional ethylenically unsaturated compound, (4) the photocurable coating composition according to any one of (1) to (3) above, wherein the alicyclic hydrocarbon group is a bridged cyclic hydrocarbon group, (5) the photocurable coating composition according to any one of (1) to (4) above, wherein it has substantially no absorption in the visible region, (6) the photocurable coating composition according to any one of (1) to (5) above, wherein it is intended for use as an overprint, (7) the photocurable coating composition according to any one of (1) to (6) above, wherein it is intended for use as an overprint for an electrophotographically printed material, (8) an overprint having an overprint layer formed by photocuring the photocurable coating composition according to any one of (1) to (7) above, and (9) a process for producing an overprint, the process comprising a step of obtaining an electrophotographically printed material by electrophotographically printing on a printing substrate, a step of coating the printed material with the photocurable coating composition according to any one of (1) to (7) above, and a step of photocuring the photocurable coating composition.

In accordance with the present invention, there can be provided a photocurable coating composition giving excellent surface smoothness, and an overprint having excellent non-tackiness and surface smoothness and a process for producing same by applying and curing the photocurable coating composition.

The photocurable coating composition of the present invention comprises an ethylenically unsaturated compound having an alicyclic hydrocarbon group and a photopolymerization initiator.

The overprint of the present invention has an overprint layer on a printed material, the overprint layer being formed by photocuring the photocurable coating composition. The printed material is preferably an electrophotographically printed material.

The process for producing an overprint of the present invention comprises a step of obtaining a printed material by carrying out printing on a printing substrate, a step of coating the printed material with the photocurable coating composition, and a step of photocuring the photocurable coating composition. Moreover, the process for producing an overprint of the present invention preferably comprises a step of obtaining an electrophotographically printed material by carrying out electrophotographic printing on a printing substrate, a step of coating the electrophotographically printed material with the photocurable coating composition, and a step of photocuring the photocurable coating composition.

### Photocurable coating composition

The photocurable coating composition of the present invention comprises an ethylenically unsaturated compound having an alicyclic hydrocarbon group and a photopolymerization initiator.

The photocurable coating composition of the present invention preferably has substantially no absorption in the visible region. 'Having substantially no absorption in the visible region' means either having no absorption in a visible region of 400 to 700 nm or having only a level of absorption in the visible region that does not cause any problem as a photocurable coating composition. Specifically, a 5 µm optical path length transmittance of the coating composition in a wavelength region of 400 to 700 nm is at least 70%, and preferably at least 80%.

The photocurable coating composition of the present invention may suitably be used as one for an overprint, and may particularly suitably be used as one for an overprint for an electrophotographically printed material.

When the photocurable coating composition of the present invention is used for forming an overprint layer on an electrophotographically printed material having an image area with a thickness of a toner, an overprint with excellent non-tackiness and surface smoothness and having luster and gloss can be obtained, and an impression that it is visually close to a conventional silver halide photographic print can be given.

Furthermore, when the photocurable coating composition of the present invention is used for a toner image having a layer of fuser oil on the image surface, an image-printed material that has excellent non-tackiness and surface smoothness, has luster and gloss, has little distortion, and is highly flexible can be given, and an overprint that is visually close to a silver halide photographic print can be obtained.

### Ethylenically unsaturated compound having alicyclic hydrocarbon group

The photocurable coating composition of the present invention (hereinafter, also called simply a 'coating composition') comprises as an essential component an ethylenically unsaturated compound having an alicyclic hydrocarbon group (hereinafter, also called a 'specific alicyclic monomer').

The 'ethylenically unsaturated compound having an alicyclic hydrocarbon group (specific alicyclic monomer)' is explained in detail below.

The ethylenically unsaturated compound having an alicyclic hydrocarbon group that can be used in the present invention is not particularly limited as long as it is a compound having in the molecule at least one ethylenically unsaturated bond and at least one alicyclic hydrocarbon group, that is, it may be either monofunctional or polyfunctional.

The ethylenically unsaturated bond of the ethylenically unsaturated compound having an alicyclic hydrocarbon group is preferably a group selected from the group consisting of a (meth)acryloyl group, an allyl group, a styryl group, and a vinyloxy group; from the viewpoint of the curing sensitivity of the coating composition a (meth)acryloyl group is more preferable, and an acryloyl group is yet more preferable.

Furthermore, from the viewpoint of surface smoothness, the ethylenically unsaturated compound having an alicyclic hydrocarbon group preferably has low viscosity, and the number of ethylenically unsaturated bonds possessed by the ethylenically unsaturated compound having an alicyclic hydrocarbon group is preferably 1 to 3 per molecule, more preferably 1 or 2, and particularly preferably 1.

That is, the ethylenically unsaturated compound having an alicyclic hydrocarbon group is preferably a 1- to 3-functional ethylenically unsaturated compound, more preferably a monofunctional or difunctional ethylenically unsaturated compound, and yet more preferably a monofunctional ethylenically unsaturated compound.

The alicyclic hydrocarbon group may be a group in which one or more hydrogen atoms are removed from an aliphatic cyclic hydrocarbon structure (also called an 'alicyclic hydrocarbon structure' or an 'alicyclic structure').

Moreover, atoms forming a ring skeleton of the aliphatic cyclic hydrocarbon structure are carbon atoms only.

Furthermore, the alicyclic hydrocarbon structure may have one or more unsaturated bonds within the structure.

The alicyclic hydrocarbon structure may have a substituent on a carbon where introduction is possible.

Examples of a substituent that can be introduced include an alkyl group, a hydroxy group, a cyano group, a halogen atom (a fluorine atom, a chlorine atom, a bromine atom, an iodine atom), an amino group, a carboxyl group, an acyl group, an alkoxy group, and a nitro group; it is preferably a short chain alkyl group having 1 to 4 carbons, it is more preferably a methyl group or an ethyl group, and it is particularly preferably a methyl group.

Moreover, the number of carbons of the ring structure possessed by the alicyclic hydrocarbon group is preferably 6 to 18, and more preferably 6 to 12.

The alicyclic hydrocarbon group is preferably a condensed polycyclic aliphatic hydrocarbon group in which a plurality of rings are condensed, or a bridged cyclic hydrocarbon group having a bridge-form carbon chain, and is more preferably a bridged cyclic hydrocarbon group.

Furthermore, the bridged cyclic hydrocarbon group is more preferably a bicyclo ring hydrocarbon group or a tricyclo ring hydrocarbon group, and particularly preferably one having a double bond within the bicyclo or tricyclo ring.

The bicyclo ring and the tricyclo ring referred to in the present invention mean that the number of cuts of bonds between ring atoms required to form an open chain structure is two and three, respectively.

Moreover, in the alicyclic hydrocarbon group, the ring forming the ring structure is preferably a 3- to 7-membered ring, more preferably 4- to 7-membered ring, and most preferably a 5- or 6-membered ring. In the case of a bridged ring, a ring whose interior is not divided by bridging corresponds to the ring forming the ring structure.

The alicyclic hydrocarbon structures are preferably structures (R-1) to (R-8) shown below. In the present invention, a hydrocarbon chain in a compound or a partial structure thereof is also represented by a simplified structural formula in which symbols for carbon (C) and hydrogen (H) are omitted.

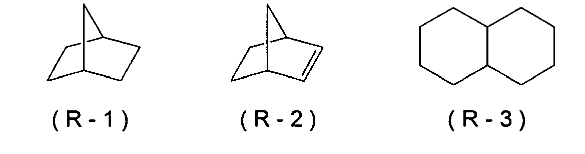

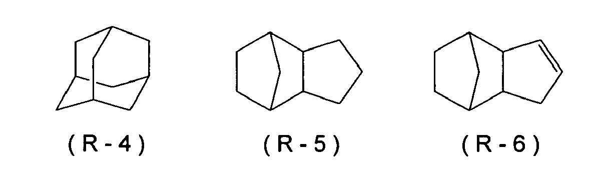

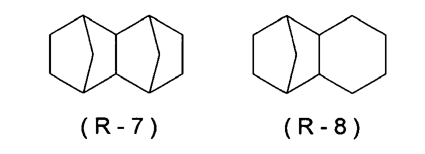

Among them, structures (R-4) to (R-8) are preferable, and structure (R-6) is particularly preferable.

In the ethylenically unsaturated compound having an alicyclic hydrocarbon group that can be used in the present invention, the alicyclic structure may be linked to an ethylenically unsaturated bond via a linking group, any site of the alicyclic structure may be bonded directly to an ethylenically unsaturated bond, or an ethylenically unsaturated bond may be present within the alicyclic structure.

The ethylenically unsaturated compound having an alicyclic hydrocarbon group is preferably a (meth)acrylate compound having an alicyclic hydrocarbon group or a (meth)acrylamide compound having an alicyclic hydrocarbon group, is more preferably a monofunctional (meth)acrylate compound having an alicyclic hydrocarbon group or a monofunctional (meth)acrylamide compound having an alicyclic hydrocarbon group, and is yet more preferably a monofunctional (meth)acrylate compound having an alicyclic hydrocarbon group.

The (meth)acrylate referred to here means acrylate or methacrylate, and (meth)acrylamide means acrylamide or methacrylamide. In the present invention, for example, a monofunctional (meth)acrylate compound means a compound that has only one (meth)acryloxy group and may further have an ethylenically unsaturated bond other than the (meth)acryloxy group. The ethylenically unsaturated bond other than the (meth)acryloxy group is preferably an ethylenically unsaturated bond that is present within the skeleton of the alicyclic hydrocarbon structure.

Specifically, the ethylenically unsaturated compound having an alicyclic hydrocarbon group that can be used in the present invention is preferably a compound represented by Formula (1), that is, a compound in which an ethylenic double bond is bonded to an alicyclic hydrocarbon group via a specified linking group.

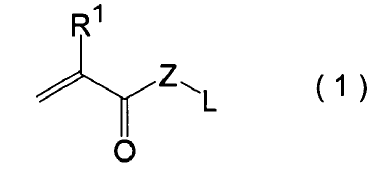

R¹ in Formula (1) denotes a hydrogen atom or a hydrocarbon group having 1 to 4 carbons (C), and is preferably a hydrogen atom or a methyl group.

Z in Formula (1) denotes a divalent linking group or a single bond, and is preferably an oxygen atom, NR², an alkylene group, or a group in which two or more thereof are combined.

Furthermore, from the viewpoint of reactivity, Z in Formula (1) is preferably an oxygen atom, NR², or a divalent linking group linked to the carbonyl group in Formula (1) via an oxygen atom or NR².

The above-mentioned R² denotes a hydrogen atom or an alkyl group having one or more carbons, is preferably an alkyl group having 1 to 20 carbons, is more preferably an alkyl group having 1 to 12 carbons, and is particularly preferably an alkyl group having 1 to 4 carbons. Specific examples of the alkyl group include a methyl group, an ethyl group, an *n*-butyl group, an *n*-hexyl group, and an *n*-nonyl group, and a methyl group, an ethyl group, and a butyl group are more preferable.

The alkylene group denoted by Z in Formula (1) may have a divalent group selected from -CO-, -O-, -S-, and -NR³- in a methylene chain formed from methylene groups (-CH₂-), and is preferably one having an ether bond (-O-) in an alkylene chain formed from methylene groups. Among them, one having an ether bond (-O-) at opposite ends of at least one alkylene group in Z of Formula (1) is particularly preferable.

Furthermore, the alkylene group denoted by Z of Formula (1) may be straight chain or branched.

Here, R³ has the same meanings as for R² above, and a preferred range thereof is also the same.

The alkylene group denoted by Z in Formula (1) is particularly preferably an alkylene group having 3 to 12 carbons, and specific examples thereof include a propylene group, a butylene group, an octylene group, and an nonylene group. The chain structure formed from methylene groups in these alkylene groups may comprise a divalent group selected from the previously described -CO-, -O-, -S-, and -NR³-. Two or more types of these divalent linking groups may be combined to form a divalent linking group.

L in Formula (1) denotes an alicyclic hydrocarbon group, and a preferred range is the same as that for the above alicyclic hydrocarbon group.

Specific examples of the ethylenically unsaturated compound having an alicyclic hydrocarbon group suitably used in the present invention are listed below as Compound Examples (B-1) to (B-31), (b-1) to (b-38), and (C-1) to (C-16), but the present invention is not limited thereto. When a Compound Example has stereoisomers, any thereof may be used, or a mixture of stereoisomers may be used. In the specific examples below, Me denotes a methyl group.

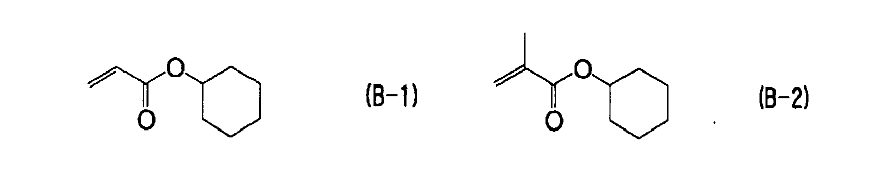

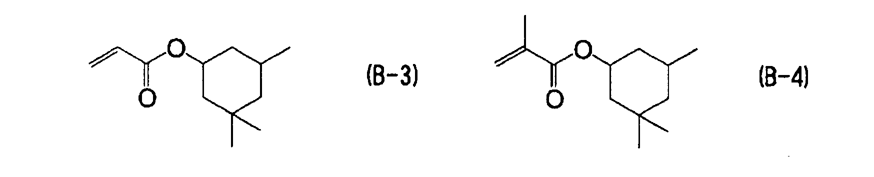

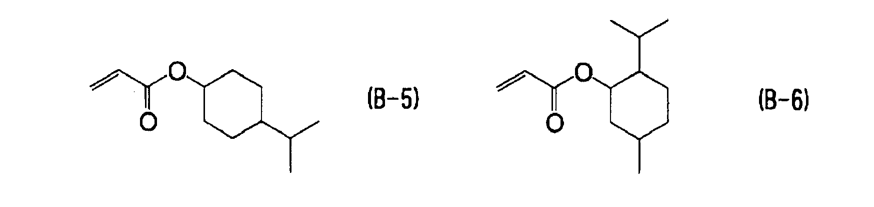

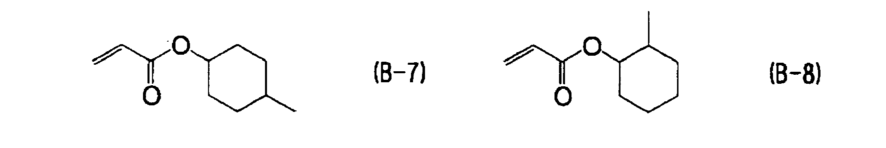

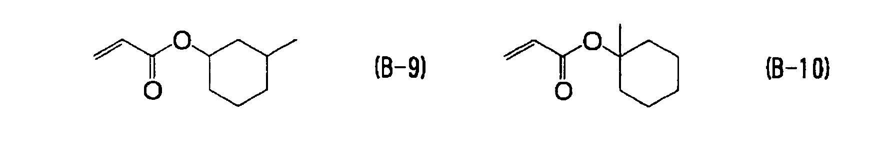

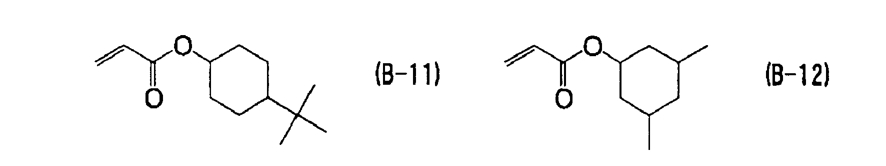

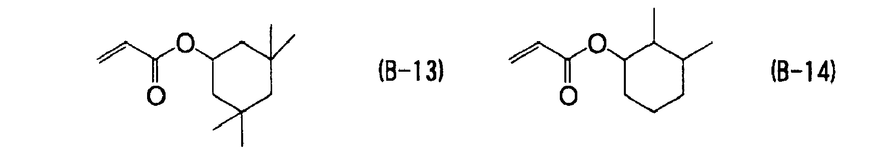

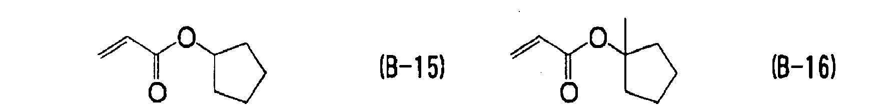

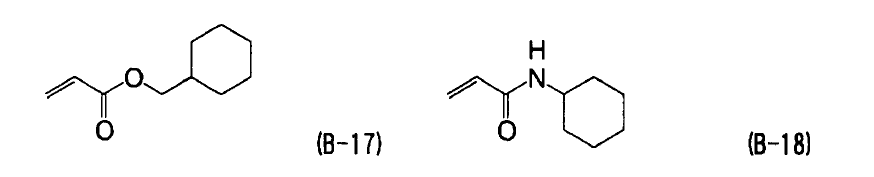

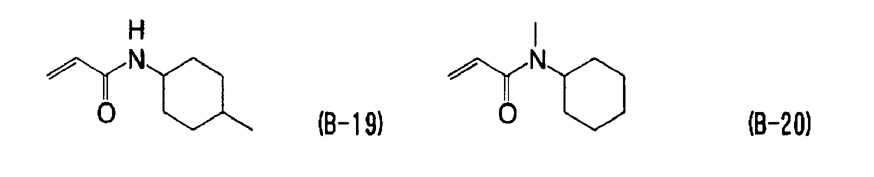

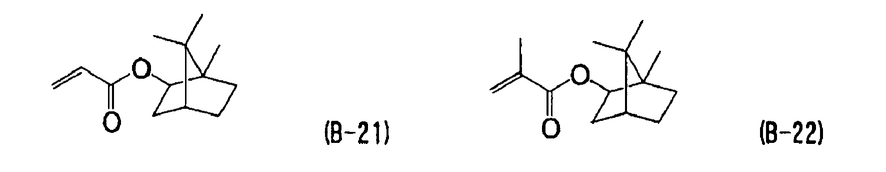

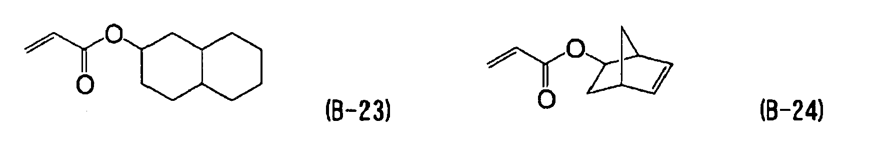

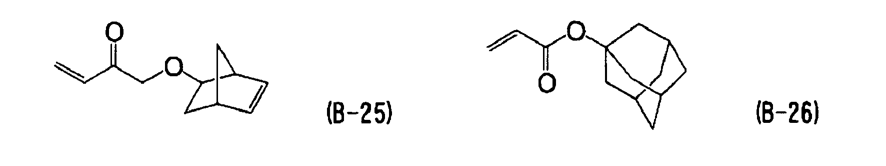

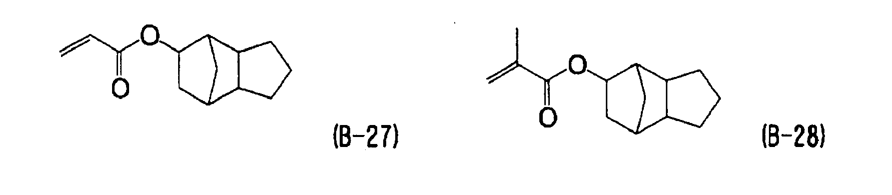

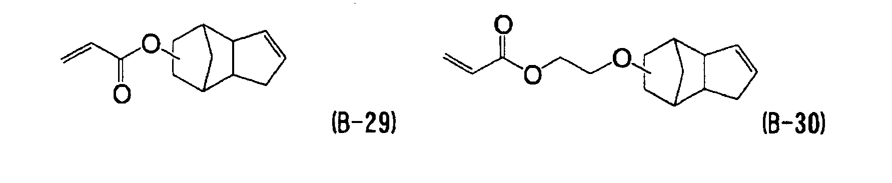

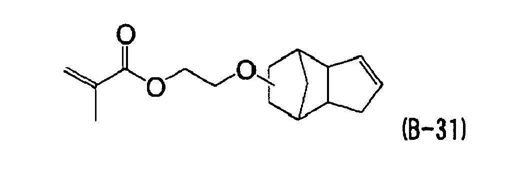

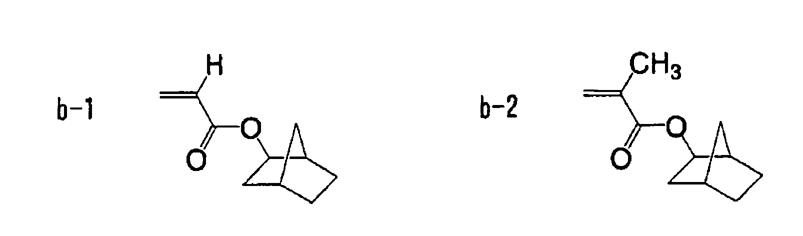

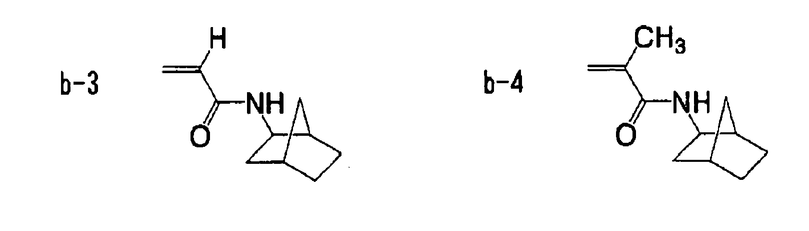

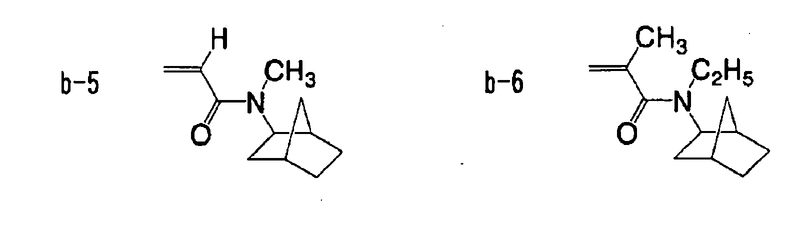

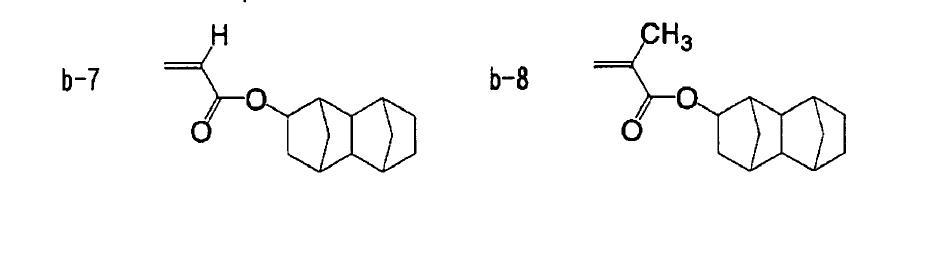

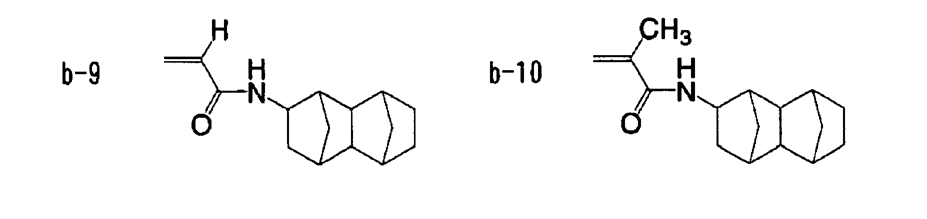

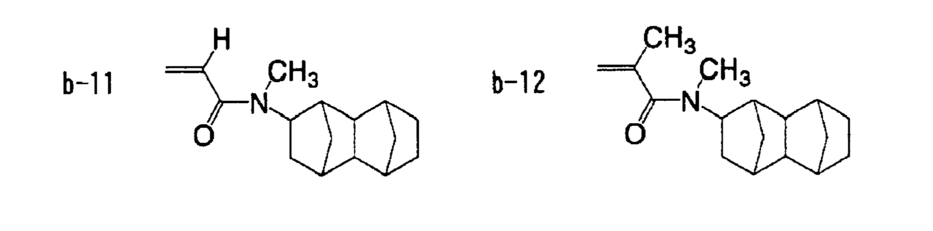

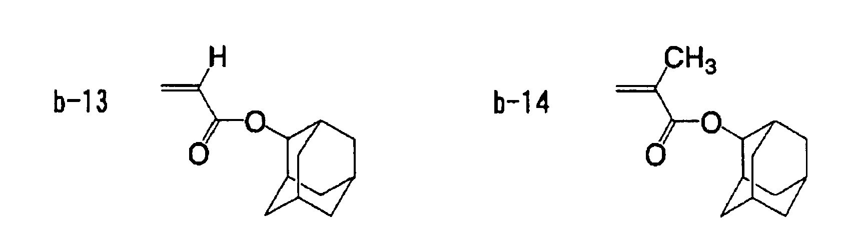

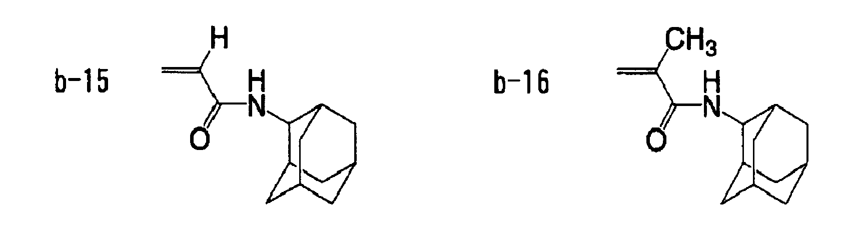

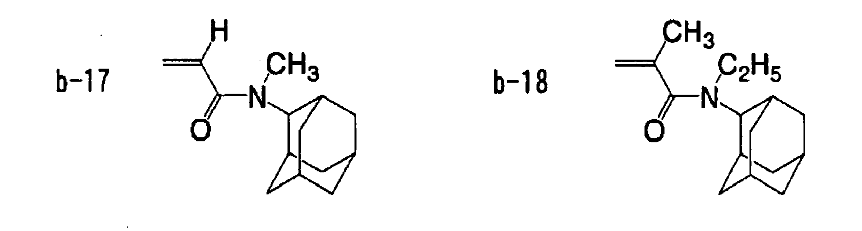

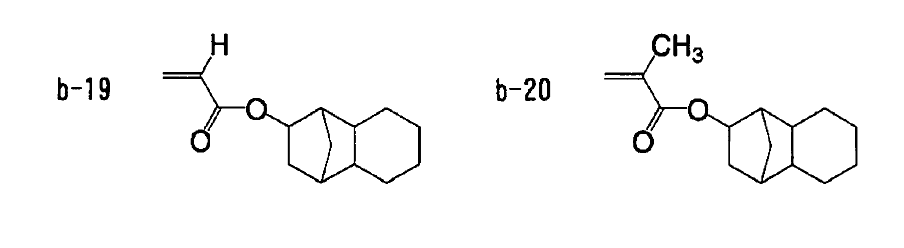

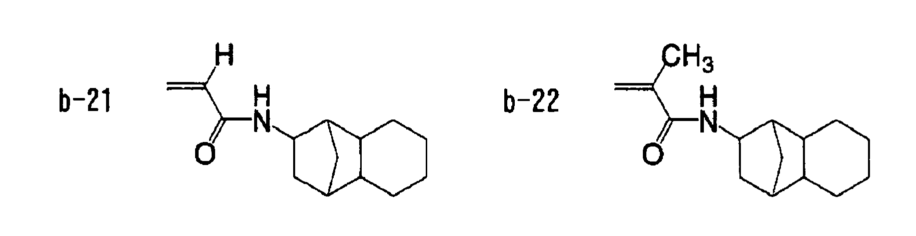

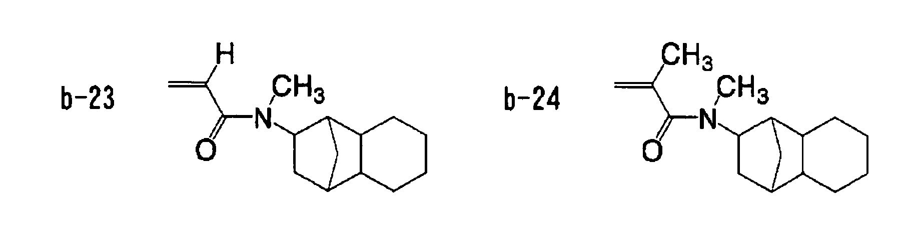

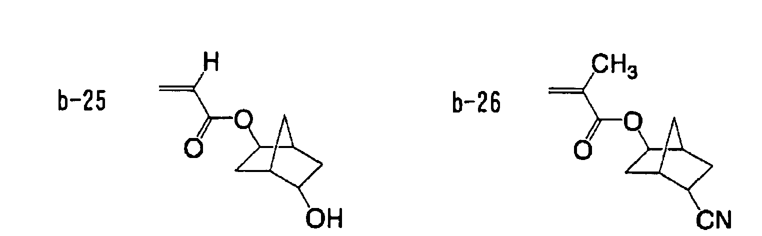

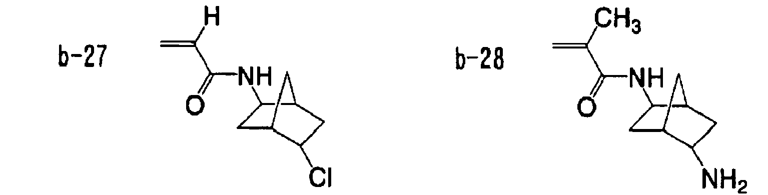

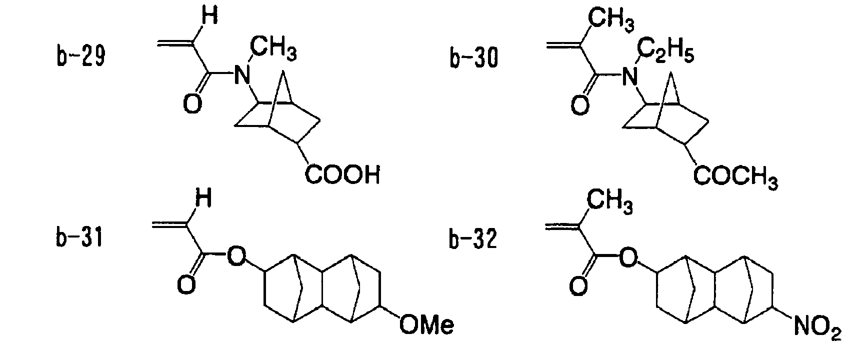

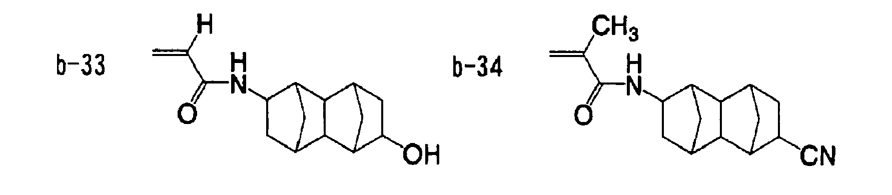

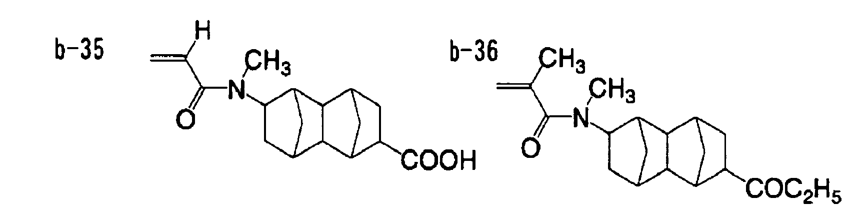

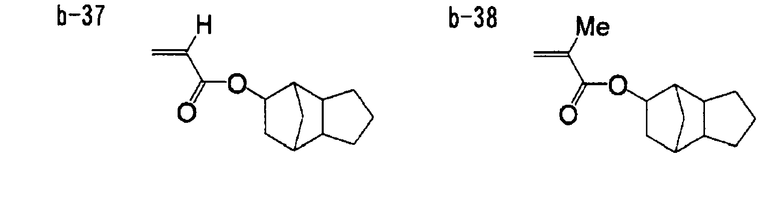

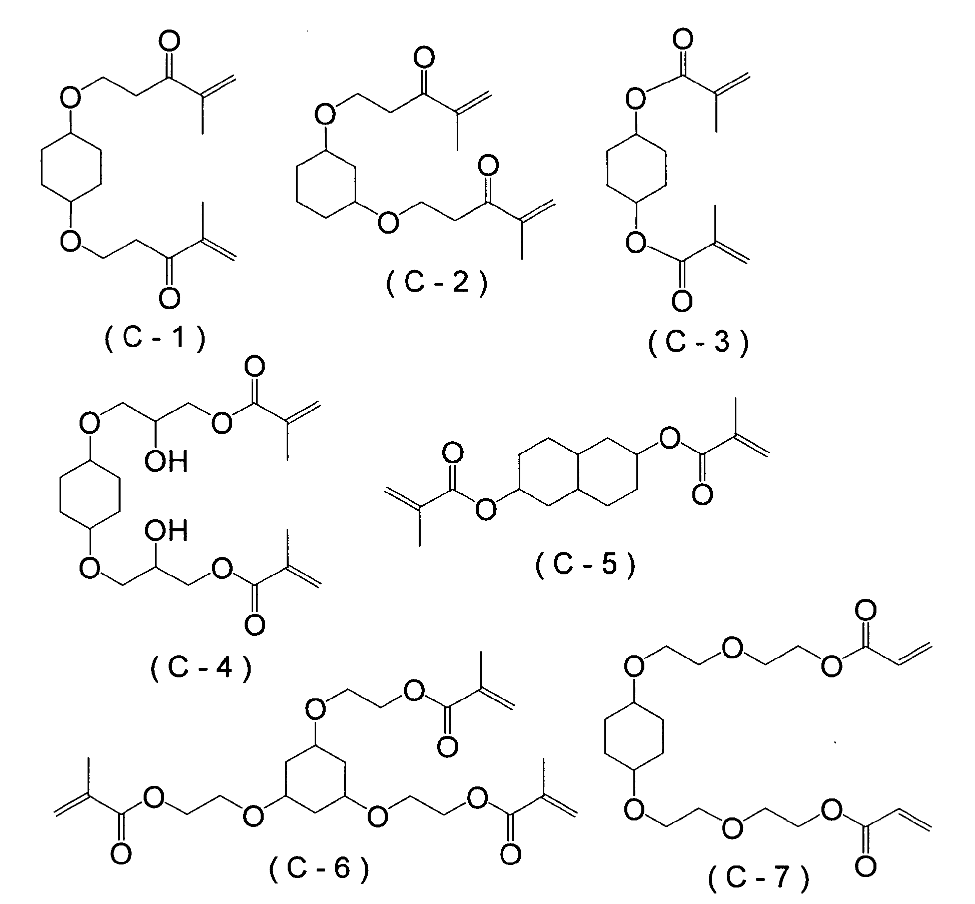

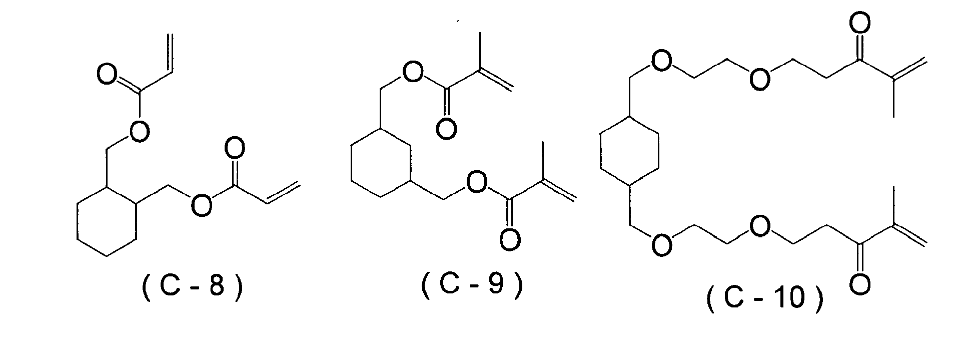

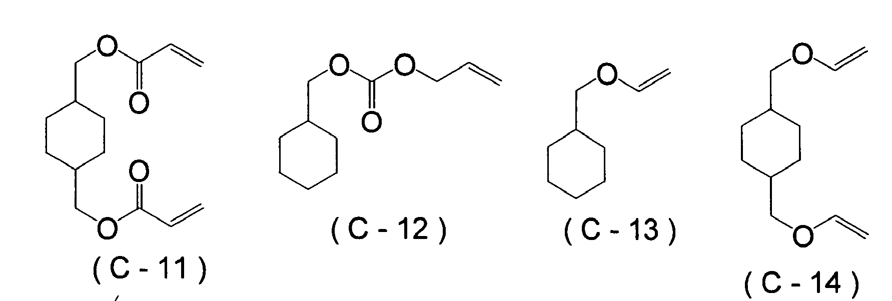

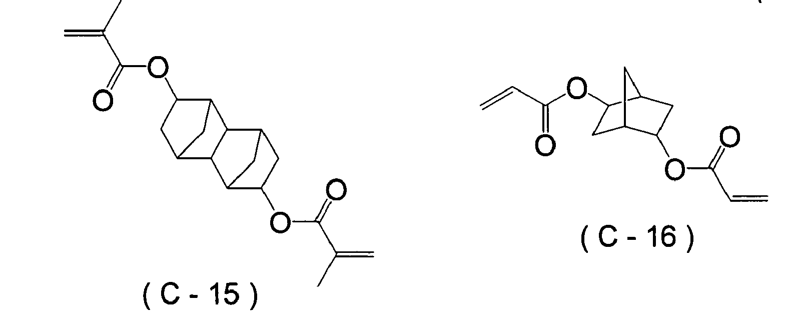

Among them, (B-29), (B-30), and (B-31) are particularly preferable.

The ethylenically unsaturated compound having an alicyclic hydrocarbon group may be produced by a known synthetic method described in, for example, US Pat. No. 3,087,962, J. Chem. Soc., Chem. Commun., Vol. 14, p. 1073 to 1074 (1986), US Pat. No. 4,097,677, New Journal of Chemistry, Vol. 17, No. 12, p. 835 to 841 (1993), etc. They are also available as commercial products such as SR423 (Sartomer Japan Inc.), SR506 (Sartomer Japan Inc.), SR535 (Sartomer Japan Inc.), SR833 (Sartomer Japan Inc.), CD406 (Sartomer Japan Inc.), A-IB (Shin-Nakamura Chemical Co., Ltd.), IB (Shin-Nakamura Chemical Co., Ltd.), FANCRYL FA-511A (Hitachi Chemical Co., Ltd.), FANCRYL FA-512A (Hitachi Chemical Co., Ltd.), FANCRYL FA-513A (Hitachi Chemical Co., Ltd.), and FANCRYL FA-512M (Hitachi Chemical Co., Ltd.).

From the viewpoint of non-tackiness (suppression of surface tackiness) and surface smoothness, the content of the ethylenically unsaturated compound having an alicyclic hydrocarbon group in the coating composition of the present invention, relative to the total weight of the photocurable coating composition, is preferably at least 10 wt %, more preferably in the range of 10 to 90 wt %, yet more preferably in the range of 10 to 60 wt %, particularly preferably in the range of 30 to 60 wt %, and most preferably in the range of 40 to 60 wt %.

Furthermore, the ethylenically unsaturated compound having an alicyclic hydrocarbon group in the coating composition of the present invention, relative to the total polymerizable monomers used, is preferably at least 25 wt %, and more preferably at least 50 wt %.

Moreover, with regard to the ethylenically unsaturated compound having an alicyclic hydrocarbon group, one type thereof may be used on its own, or two or more types may be used in combination. The ethylenically unsaturated compound having an alicyclic hydrocarbon group may have one of the alicyclic hydrocarbon groups or two or more thereof, but preferably has only one.

### Other polymerizable compound

The photocurable coating composition of the present invention may comprise, in addition to the ethylenically unsaturated compound having an alicyclic hydrocarbon group, another polymerizable compound.

Examples of the other polymerizable compound that can be used in the present invention include radically polymerizable compounds and cationically polymerizable compounds not having an alicyclic hydrocarbon group.

The other radically polymerizable compound that can be used in the present invention is a compound having a radically polymerizable ethylenically unsaturated bond, is preferably copolymerizable with the ethylenically unsaturated compound having an alicyclic hydrocarbon group, and may be any compound as long as it is a compound not having an alicyclic hydrocarbon group but at least one radically polymerizable ethylenically unsaturated bond in the molecule, and a monomer, an oligomer, a polymer, etc. are included.

With regard to the radically polymerizable compound not having an alicyclic hydrocarbon group, one type thereof may be used on its own, or two or more types thereof may be used in combination at any ratio in order to improve intended properties. It is preferable to use two or more types thereof in combination from the viewpoint of controlling performance such as reactivity and physical properties.

Examples of polymerizable compounds having a radically polymerizable ethylenically unsaturated bond include unsaturated carboxylic acids such as acrylic acid, methacrylic acid, itaconic acid, crotonic acid, isocrotonic acid, and maleic acid, and salts thereof, acid anhydrides having an ethylenically unsaturated group, acrylonitrile, styrene, various types of unsaturated polyesters, unsaturated polyethers, unsaturated polyamides, and unsaturated urethanes.

Specific examples thereof include acrylic acid derivatives such as methyl acrylate, ethyl acrylate, *n*-butyl acrylate, 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentyl glycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, propylene glycol diacrylate, dipropylene glycol diacrylate, tripropylene glycol diacrylate, tetrapropylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, *N*-methylolacrylamide, diacetoneacrylamide, epoxyacrylate, lauryl acrylate, and hexanediol diacrylate, methacrylic derivatives such as methyl methacrylate, ethyl methacrylate, *n*-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, and 2,2-bis(4-methacryloxypolyethoxyphenyl)propane, N-vinyl compounds such as N-vinylpyrrolidone and N-vinylcaprolactam, allyl compound derivatives such as allyl glycidyl ether, diallyl phthalate, and triallyl trimellitate and, more specifically, radically polymerizable or crosslinking monomers, oligomers, and polymers that are commercial products or are industrially known, such as those described in 'Kakyozai Handobukku' (Crosslinking Agent Handbook), Ed. S. Yamashita (Taiseisha, 1981); 'UV· EB Koka Handobukku' (UV·EB Curing Handbook) (Starting Materials) Ed. K. Kato (Kobunshi Kankoukai, 1985); 'UV·EB Koka Gijutsu no Oyo to Shijyo' (Application and Market of UV.EB Curing Technology), p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) may be used.

Among them, it is preferable to use tripropylene glycol diacrylate, N-vinylcaprolactam, lauryl acrylate, or hexanediol diacrylate.

Furthermore, as the radically polymerizable compound, photocuring polymerizable compound materials used in photopolymerizable compositions described in, for example, JP-A-7-159983, JP-B-7-31399 (JP-B denotes a Japanese examined patent application publication), JP-A-8-224982, JP-A-10-863, JP-A-9-134011, etc. are known, and they may be used in the coating composition of the present invention.

Moreover, as the radically polymerizable compound used in combination, a vinyl ether compound is also preferably used. Examples of vinyl ether compounds that can suitably be used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, ethylene glycol monovinyl ether, triethylene glycol monovinyl ether, hydroxyethyl monovinyl ether, and hydroxynonyl monovinyl ether.

Among these vinyl ether compounds, divinyl ether compounds and trivinyl ether compounds are preferable from the viewpoint of curability, adhesion, and surface hardness, and divinyl ether compounds are particularly preferable. With regard to the vinyl ether compound, one type thereof may be used on its own or two or more types may be used in an appropriate combination.

As other polymerizable compounds that can be used in the present invention, (meth)acrylic acid esters (hereinafter, also called 'acrylate compounds' as appropriate) not having an alicyclic hydrocarbon group such as (meth)acrylic-based monomers or prepolymers, epoxy-based monomers or prepolymers, or urethane-based monomers or prepolymers are preferably used. Preferred specific examples thereof are as follows.

That is, there can be cited 2-ethylhexyldiglycol acrylate, 2-hydroxy-3-phenoxypropyl acrylate, 2-hydroxybutyl acrylate, hydroxypivalic acid neopentyl glycol diacrylate, 2-acryloyloxyethylphthalic acid, methoxy polyethylene glycol acrylate, tetramethylolmethane triacrylate, 2-acryloyloxyethyl-2-hydroxyethylphthalic acid, dimethyloltricyclodecane diacrylate, ethoxylated phenyl acrylate, 2-acryloyloxyethylsuccinic acid, nonylphenol ethylene oxide (EO) adduct acrylate, modified glycerol triacrylate, bisphenol A diglycidyl ether acrylic acid adduct, modified bisphenol A diacrylate, phenoxypolyethylene glycol acrylate, 2-acryloyloxyethylhexahydrophthalic acid, bisphenol A propylene oxide (PO) adduct diacrylate, bisphenol A EO adduct diacrylate, dipentaerythritol hexaacrylate, pentaerythritol triacrylate tolylene diisocyanate urethane prepolymer, lactone-modified flexible acrylate, butoxyethyl acrylate, propylene glycol diglycidyl ether acrylic acid adduct, pentaerythritol triacrylate hexamethylene diisocyanate urethane prepolymer, 2-hydroxyethyl acrylate, methoxydipropylene glycol acrylate, ditrimethylolpropane tetraacrylate, pentaerythritol triacrylate, hexamethylene diisocyanate urethane prepolymer, stearyl acrylate, isoamyl acrylate, isomyristyl acrylate, isostearyl acrylate, lactone-modified acrylate, and corresponding methacrylate compounds etc.

The acrylate compounds listed here have high reactivity, low viscosity, and excellent adhesion to a printing substrate.

The coating composition of the present invention preferably comprises a polyfunctional ethylenically unsaturated compound as the essential ethylenically unsaturated compound having an alicyclic hydrocarbon group or the optionally used other polymerizable compound.

When a polyfunctional ethylenically unsaturated compound is used, the content of the polyfunctional ethylenically unsaturated compound, relative to the total weight of the coating composition, is preferably 5 to 40 wt %, and more preferably 10 to 30 wt %. When it is in the above range, since the non-tackiness is excellent and the viscosity of the coating composition is appropriate, good surface smoothness can be obtained.

In the present invention, in order to improve the non-tackiness (suppression of surface tackiness) and the surface smoothness, it is preferable to use in combination the ethylenically unsaturated compound having an alicyclic hydrocarbon group and a polyfunctional ethylenically unsaturated compound not having an alicyclic hydrocarbon group, it is more preferable to use in combination the ethylenically unsaturated compound having an alicyclic hydrocarbon group and a polyfunctional (meth)acrylate monomer not having an alicyclic hydrocarbon group, and it is yet more preferable to use in combination the ethylenically unsaturated compound having an alicyclic hydrocarbon group and a polyfunctional acrylate monomer not having an alicyclic hydrocarbon group.

When the ethylenically unsaturated compound having an alicyclic hydrocarbon group and a polyfunctional ethylenically unsaturated compound not having an alicyclic hydrocarbon group are used in combination, the content of the polyfunctional ethylenically unsaturated compound not having an alicyclic hydrocarbon group, relative to the total weight of the coating composition, is preferably 5 to 40 wt %, and more preferably 10 to 30 wt %. When it is in the above range, the non-tackiness is excellent, and an appropriate viscosity as a coating composition can be obtained.

In the present invention, depending on various intended applications, a radical/cationic hybrid coating composition may be employed in which a combination of the radically polymerizable compound and a radical polymerization initiator is used together with a combination of a cationically polymerizable compound described below and a cationic polymerization initiator.

The cationically polymerizable compound that can be used in the present invention is not particularly limited as long as it is a compound for which a polymerization reaction is initiated by an acid generated from a photo-acid generator and that cures, and various types of known cationically polymerizable monomers known as cationically photopolymerizable monomers may be used.

Examples of the cationically polymerizable monomer include epoxy compounds, vinyl ether compounds, and oxetane compounds described in JP-A-6-9714, JP-A-2001-31892, JP-A-2001-40068, JP-A-2001-55507, JP-A-2001-310938, JP-A-2001-31 0937, JP-A-2001-220526, etc.

Furthermore, as the cationically polymerizable compound, for example, a polymerizable compound applied in a photocurable resin of a cationic polymerization system is known, and in recent years polymerizable compounds applied in photocurable resins of cationic photopolymerization systems sensitized to a visible light wavelength range of 400 nm or higher have been disclosed in, for example, JP-A-6-43633 and JP-A-8-324137. They may be applied in the coating composition of the present invention.

### Photopolymerization initiator

The coating composition of the present invention comprises a photopolymerization initiator.

As the photopolymerization initiator, a known polymerization initiator may be used. In the present invention, it is preferable to use a radical photopolymerization initiator.

The photopolymerization initiator used in the coating composition of the present invention is a compound that absorbs external energy from actinic radiation and generates a polymerization initiating species. Examples of the actinic radiation include γ-rays, β-ray, an electron beam, UV rays, visible light, and IR rays. The wavelength used is not particularly limited, but is preferably a wavelength range of 200 to 500 nm, and more preferably 200 to 450 nm.

Preferred examples of the radical photopolymerization initiator that can be used in the present invention include (a) aromatic ketones, (b) acylphosphine compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (I) carbon-halogen bond-containing compounds, and (m) alkylamine compounds.

As a photopolymerization initiator that is preferable from the viewpoint of transparency, when the photopolymerization initiator is made into a 3 g/cm² thick film, a compound with an absorbance at a wavelength of 400 nm of no greater than 0.3 is preferable; it is more preferably no greater than 0.2, and yet more preferably no greater than 0.1.

Among the above, as a preferred photopolymerization initiator, there can be cited (a) aromatic ketones, (b) acylphosphine compounds, and (c) aromatic onium salt compounds.

With regard to the photopolymerization initiator in the present invention, one type thereof may be used on its own or two or more types thereof may be used in combination.

The content of the photopolymerization initiator in the present invention, relative to the total amount of the ethylenically unsaturated compound having an alicyclic hydrocarbon group and the other polymerizable compound used in combination, is preferably 0.01 to 35 wt %, more preferably 0.1 to 30 wt %, and yet more preferably 0.5 to 30 wt %.

Furthermore, when a sensitizer, which will be described later, is used, the ratio by weight of the photopolymerization initiator to the sensitizer (photopolymerization initiator : sensitizer) is preferably 200:1 to 1:200, more preferably 50:1 to 1:50, and yet more preferably 20:1 to 1:5.

In the present invention, as a cationic polymerization initiator (photo-acid generator) that is used in combination with a cationically polymerizable compound, for example, compounds that are used for chemically amplified photoresists or cationic photopolymerization are used (e.g. 'Imejingu you Yukizairyou' (Organic Materials for Imaging), Ed. The Japanese Research Association for Organic Electronics Materials, Bunshin Publishing Co. (1993), pp. 187-192).

Examples of cationic polymerization initiators that are suitable in the present invention are as follows.

That is, firstly, there can be cited B(C₆F₅)₄⁻, PF₆⁻, AsF₆⁻, SbF₆⁻, CF₃SO₃⁻ salts of diazonium, ammonium, iodinium, sulfonium, phosphonium, etc. aromatic onium compounds. Secondly, there can be cited sulfonated materials that generate a sulfonic acid. Thirdly, halides that photogenerate a hydrogen halide can also be used. Fourthly, iron arene complexes can be used.

With regard to the above-mentioned cationic polymerization initiator, one type thereof may be used on its own or two or more types may be used in combination. Sensitizer

A sensitizer may be added to the coating composition of the present invention in order to promote decomposition of the photopolymerization initiator by irradiation with actinic radiation.

The sensitizer absorbs specific actinic radiation and attains an electronically excited state. The sensitizer in the electronically excited state contacts the photopolymerization initiator and causes an action such as electron transfer, energy transfer, or generation of heat, thereby promoting chemical change of the photopolymerization initiator, that is, decomposition and generation of a radical, an acid, or a base.

With regard to the sensitizer that can be used in the present invention, it is preferable to use a compound or an amount for which effects such as coloring are small when the coating composition of the present invention is used in an overprint.

The content of the sensitizer in the present invention, relative to the total weight of the coating composition, is preferably 0.001 to 5 wt %, and more preferably 0.01 to 3 wt %. When the amount thereof added is in this range, the curability improves and there is little coloring effect.

As the sensitizer, a compound may be used that is appropriate for the wavelength of actinic radiation that generates an initiating species in the photopolymerization initiator used, but taking into consideration use in a curing reaction of a normal coating composition, preferred examples of the sensitizer include the types of compounds that come under those listed below and that have an absorption wavelength in the range of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), coumarins (e.g. 7-diethylamino-4-methylcoumarin), and benzophenones (e.g. benzophenone).

Preferred examples of the sensitizer include compounds represented by Formulae (II) to (VI) below.

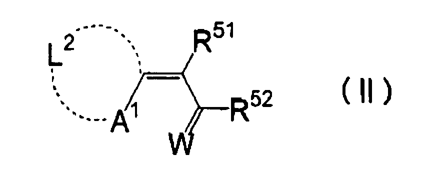

In Formula (II), A¹ denotes a sulfur atom or NR⁵⁰, R⁵⁰ denotes an alkyl group or an aryl group, L² denotes a non-metallic atomic group forming a basic nucleus in cooperation with the adjacent A¹ and carbon atom, R⁵¹ and R⁵² independently denote a hydrogen atom or a monovalent non-metallic atomic group, and R⁵¹ and R⁵² may be bonded together to form an acidic nucleus. W denotes an oxygen atom or a sulfur atom.

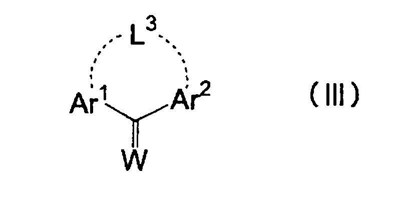

In Formula (III), Ar¹ and Ar² independently denote an aryl group and are connected to each other via bonding to -L³-. Here, L³ denotes -O- or -S-. W has the same meaning as that shown in Formula (II).

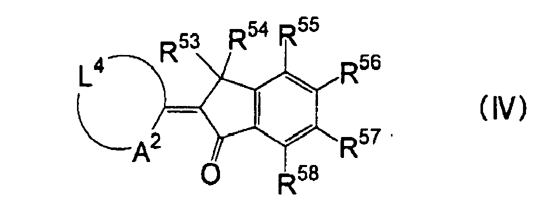

In Formula (IV), A² denotes a sulfur atom or NR⁵⁹, L⁴ denotes a non-metallic atomic group forming a basic nucleus in cooperation with the adjacent A² and carbon atom, R⁵³, R⁵⁴ , R⁵⁵ , R⁵⁶ , R⁵⁷, and R⁵⁸ independently denote a monovalent non-metallic atomic group, and R⁵⁹ denotes an alkyl group or an aryl group.

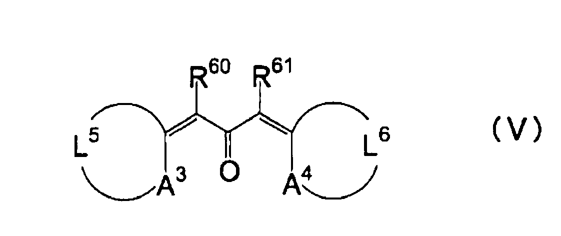

In Formula (V), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus in cooperation with the adjacent A³ and A⁴ and adjacent carbon atom, and R⁶⁰ and R⁶¹ independently denote a hydrogen atom or a monovalent non-metallic atomic group, or are bonded to each other to form an aliphatic or aromatic ring.

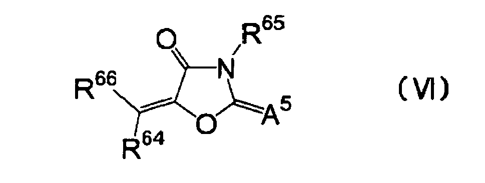

In Formula (VI), R⁶⁶ denotes an optionally substituted aromatic ring or hetero ring, and A⁵ denotes an oxygen atom, a sulfur atom, or NR⁶⁷. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Preferred specific examples of the compound represented by Formulae (II) to (VI) are listed below.

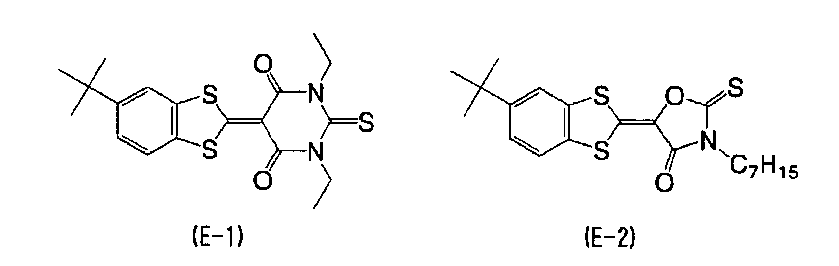

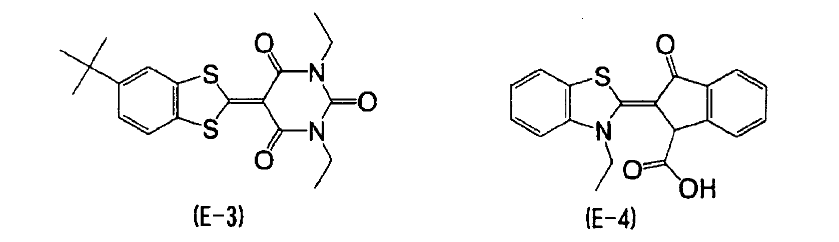

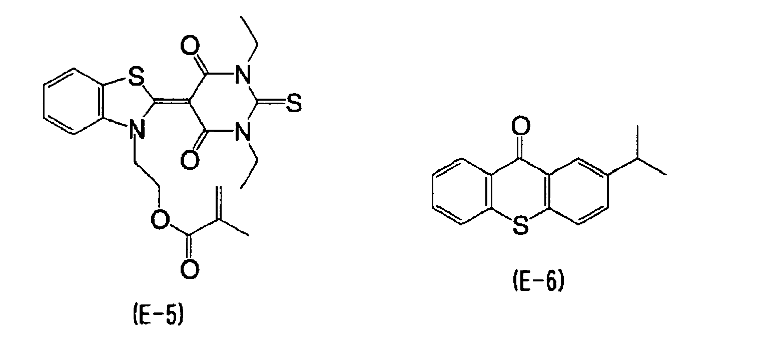

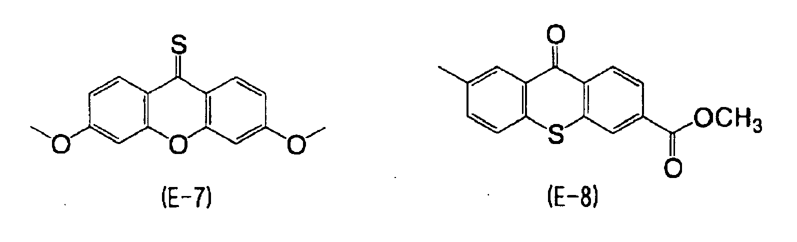

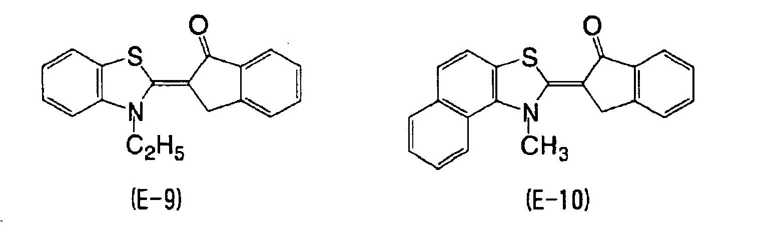

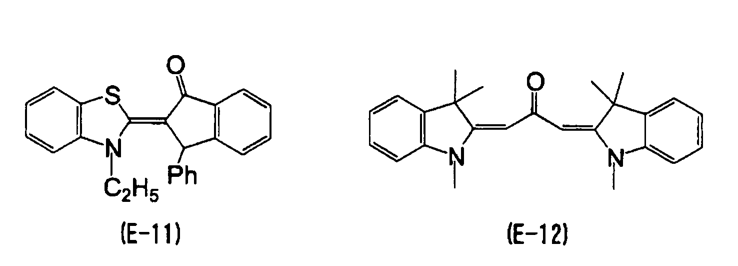

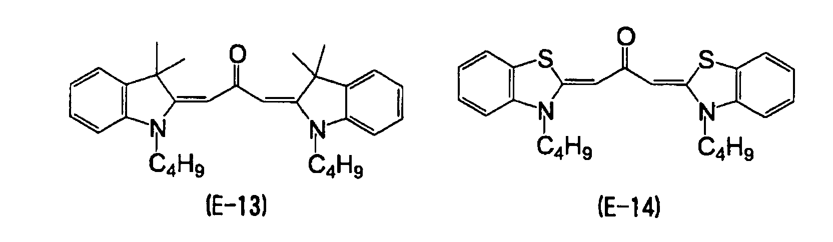

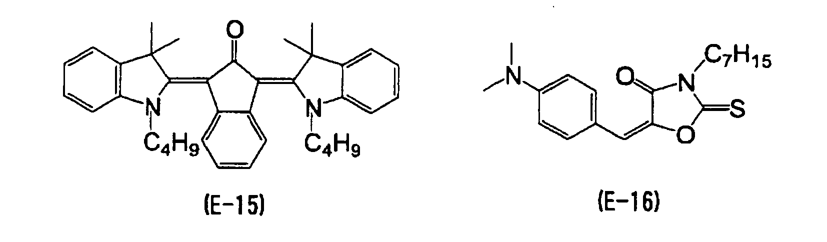

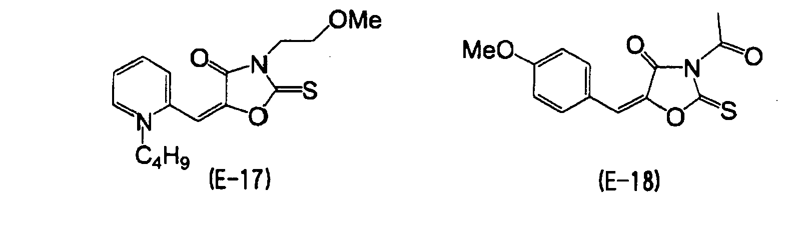

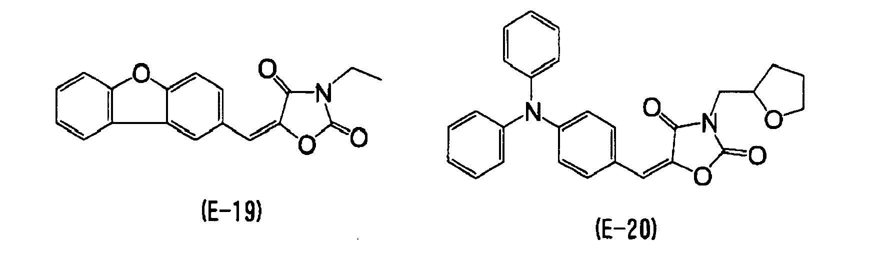

### Co-sensitizer

The coating composition of the present invention may comprise a co-sensitizer.

In the present invention, the co-sensitizer has a function of further improving the sensitivity of a sensitizer toward actinic radiation, suppressing inhibition of polymerization of a polymerizable compound by oxygen, etc.

Examples of such a co-sensitizer include amines such as compounds described in M. R. Sander et al., Journal of Polymer Society, Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure 33825.

Specific examples thereof include triethanolamine, ethyl *p*-dimethylaminobenzoate, *p*-formyldimethylaniline, and *p*-methylthiodimethylaniline.

Other examples of the co-sensitizer include thiols and sulfides such as thiol compounds described in JP-A-53-702, JP-PCT-55-500806 (JP-PCT denotes a published Japanese translation of a PCT application), and JP-A-5-142772, and disulfide compounds described in JP-A-56-75643.

Specific examples thereof include 2-mercaptobenzothiazole, 2-mercaptobenzoxazole, 2-mercaptobenzoimidazole, 2-mercapto-4(3H)-quinazoline, and β-mercaptonaphthalene.

Other examples thereof include amino acid compounds (e.g. N-phenylglycine), organometallic compounds described in JP-B-48-42965 (e.g. tributyltin acetate), hydrogen donors described in JP-B-55-34414, sulfur compounds described in JP-A-6-308727 (e.g. trithiane), phosphorus compounds described in JP-A-6-250387 (e.g. diethylphosphite), and Si-H and Ge-H compounds described in JP-A-8-54735. Surfactant

The coating composition of the present invention may comprise a surfactant.

As the surfactant, those described in JP-A-62-173463 and JP-A-62-183457 can be cited. Examples thereof include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound or a polysiloxane compound may be used as the surfactant. The organofluoro compound is preferably hydrophobic. Examples of the organofluoro compound include fluorine-based surfactants, oil-like fluorine-based compounds (e.g. fluorine oil), solid fluorine compound resins (e.g. tetrafluoroethylene resin), and those described in JP-B-57-9053 (paragraphs 8 to 17) and JP-A-62-135826. Among them, polydimethylsiloxane is preferable as the surfactant.

With regard to these surfactants, one type thereof may be used on its own or two or more types may be used in combination.

### Other components

Other components may be added to the coating composition of the present invention as necessary. Examples of said other components include a polymerization inhibitor, a solvent, inorganic particles, and organic particles.

The polymerization inhibitor may be added from the viewpoint of enhancing the storage stability. The polymerization inhibitor is preferably added at 200 to 20,000 ppm relative to the total amount of the coating composition of the present invention.

Examples of the polymerization inhibitor include hydroquinone, benzoquinone, *p*-methoxyphenol, TEMPO, TEMPOL, and Al cupferron.

It is possible to form an overprint layer or an overprint with intentionally degraded surface gloss by adding inorganic particles such as AEROSIL (silicon dioxide particles, manufactured by Degussa Inc.) or organic particles such as crosslinked polymethyl methacrylate (PMMA) to the coating composition of the present invention.

Taking into consideration the coating composition of the present invention being a radiation curable type coating composition, it is preferable for it not to contain any solvent so that the coating composition of the present invention can react quickly and be cured after coating. However, as long as the curing speed, etc. of the coating composition is not greatly affected, a specified solvent may be added.

In the present invention, an organic solvent may be used as the solvent, and from the viewpoint of curing speed, it is preferable for substantially no water to be added. The organic solvent may be added in order to improve adhesion to a printing substrate (an image receiving substrate such as paper).

When an organic solvent is used, the smaller the amount thereof, the more preferable it is, and it is preferably 0.1 to 5 wt % relative to the total weight of the coating composition of the present invention, and more preferably 0.1 to 3 wt %.

In addition to the above, a known compound may be added to the coating composition of the present invention as necessary.

Examples thereof include a leveling additive, a matting agent and, for adjusting film physical properties, a polyester-based resin, polyurethane-based resin, vinyl-based resin, acrylic-based resin, rubber-based resin, or wax, which may be appropriately selected and added.

Furthermore, in order to improve the adhesion to a printing substrate such as a polyolefin or polyethylene terephthalate (PET), a tackifier that does not inhibit polymerization is preferably added. Specific examples of the tackifier include high molecular weight tacky polymers described on pp. 5 and 6 of JP-A-2001-49200 (e.g. a copolymer formed from an ester of (meth)acrylic acid and an alcohol having an alkyl group having 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of photocurable coating composition

Preferred physical properties of the photocurable coating composition of the present invention are now explained.

When used as a photocurable coating composition, while taking into consideration coating properties, the viscosity at 25°C to 30°C is preferably 5 to 100 mPa.s, and more preferably 7 to 75 mPa.s.

The compositional ratio of the photocurable coating composition of the present invention is preferably adjusted as appropriate so that the viscosity is in the above range.

Setting the viscosity at 25°C to 30°C at the above value enables an overprint having an overprint layer with excellent non-tackiness (no surface tackiness) and excellent surface smoothness to be obtained.

The surface tension of the photocurable coating composition of the present invention is preferably 16 to 40 mN/m, and more preferably 18 to 35 mN/m.

### Overprint and process for producing same

The overprint of the present invention has, on a printed material, an overprint layer in which the coating composition of the present invention is photocured.

The overprint referred to here is one in which at least one overprint layer is formed on the surface of a printed material obtained by a printing method such as electrophotographic printing, inkjet printing, screen printing, flexographic printing, lithographic printing, intaglio printing, or relief printing.

The overprint layer in the overprint of the present invention may be formed on part of a printed material or may be formed on the entire surface of a printed material, and in the case of a double-side printed material, it is preferable to form the overprint layer on the entire surface of a printing substrate on both sides. Furthermore, needless to say, the overprint layer may be formed on an unprinted area of a printed material.

A printed material used for the overprint of the present invention is preferably an electrophotographically printed material. Forming an overprint layer, which is a cured layer of the coating composition of the present invention, on an electrophotographically printed material enables an overprint that has excellent non-tackiness, surface smoothness, and gloss and is visually similar to a silver halide photographic print to be obtained.

The thickness of the overprint layer in the overprint of the present invention is preferably 1 to 10 µm, and more preferably 3 to 6 µm.

A method for measuring the thickness of the overprint layer is not particularly limited, but preferred examples thereof include a measurement method in which a cross section of an overprint is examined using an optical microscope, etc.

The process for producing an overprint of the present invention preferably comprises a step of obtaining a printed material by carrying out printing on a printing substrate, a step of coating the printed material with the photocurable coating composition of the present invention, and a step of photocuring the photocurable coating composition.

Furthermore, the process for producing an overprint of the present invention preferably comprises a step of generating an electrostatic latent image on a latent image support, a step of developing the electrostatic latent image using a toner, a step of obtaining an electrophotographically printed material by transferring the developed electrostatic image onto a printing substrate, a step of coating the electrophotographically printed material with the photocurable coating composition of the present invention, and a step of photocuring the photocurable coating composition.

The printing substrate is not particularly limited, and a known substrate may be used, but an image receiving paper is preferable, plain paper or coated paper is more preferable, and coated paper is yet more preferable. As the coated paper, a double-sided coated paper is preferable since a full color image can be attractively printed on both sides. When the printing substrate is paper or a double-sided coated paper, the paper weight is preferably 20 to 200 g/m², and more preferably 40 to 160 g/m².

A method for developing an image in the electrophotographic process is not particularly limited, and any method may be selected from methods known to a person skilled in the art. Examples thereof include a cascade method, a touch down method, a powder cloud method, and a magnetic brush method.

Furthermore, examples of a method for transferring a developed image to a printing substrate include a method employing a corotron or a bias roll.

A fixing step of fixing an image in the electrophotographic process may be carried out by various appropriate methods. Examples thereof include flash fixing, thermal fixing, pressure fixing, and vapor fusing.

The image formation method, equipment, and system in the electrophotographic process are not particularly limited, and known ones may be used. Specific examples are described in the US Patents below.

US Pat. Nos. 4,585,884, 4,584,253, 4,563,408, 4,265,990, 6,180,308, 6,212,347, 6,187,499, 5,966,570, 5,627,002, 5,366,840, 5,346,795, 5,223,368, and 5,826,147.

In order to apply the photocurable coating composition, a commonly used liquid film coating device may be used. Specific examples thereof include a roller coater, a rod coater, a blade, a wire-wound bar, a dip coater, an air knife, a curtain coater, a slide coater, a doctor knife, a screen coater, a gravure coater, an offset gravure coater, a slot coater, and an extrusion coater. These devices may be used in the same manner as normal, and examples thereof include direct and reverse roll coating, blanket coating, dampener coating, curtain coating, lithographic coating, screen coating, and gravure coating. In a preferred embodiment, application and curing of the coating composition of the present invention are carried out using 2 or 3 roll coaters and UV curing stations.

Moreover, when coating or curing the coating composition of the present invention, heating may be carried out as necessary.

The coat weight of the coating composition of the present invention is preferably in the range of 1 to 10 g/m² as a weight per unit area, and more preferably 3 to 6 g/m².

Furthermore, the amount per unit area of an overprint layer formed in the overprint of the present invention is preferably in the range of 1 to 10 g/m², and more preferably 3 to 6 g/m².

As an energy source used for initiating polymerization of the polymerizable compound contained in the coating composition of the present invention, for example, one having actinism (actinic radiation) such as radiation having a wavelength in the UV or visible spectrum can be cited. Polymerization by irradiation with actinic radiation is excellent for initiating polymerization and regulating the speed of polymerization.

As a preferred actinic radiation source, for example, there are a mercury lamp, a xenon lamp, a carbon arc lamp, a tungsten filament lamp, a laser, and sunlight.

It is preferable to carry out irradiation using a high speed conveyor (preferably 15 to 70 m/min) under irradiation with UV rays (UV light irradiation) using a medium pressure mercury lamp, and in this case UV light irradiation is preferably carried out at a wavelength of 200 to 500 nm for less than 1 sec. Preferably, the speed of the high speed conveyor is 15 to 35 m/min, and UV light having a wavelength of 200 to 450 nm is applied for 10 to 50 milliseconds (ms). The emission spectrum of a UV light source normally overlaps the absorption spectrum of a UV polymerization initiator. Depending on the situation, curing equipment used may include, without being limited to, a reflection plate for focusing or diffusing UV light or a cooling system for removing heat generated by a UV light source.

### EXAMPLES

The present invention is explained in further detail below by reference to Examples, but the present invention is not limited to modes in these Examples.

### Example 1

The components below were stirred using a stirrer to give a photocurable coating composition.

| | |
|---|---|
| Ethylenically unsaturated compound having alicyclic hydrocarbon group shown in Table 1 | 50wt% |
| Tripropylene glycol diacrylate (manufactured by Aldrich) | 20 wt % |
| N-Vinylcaprolactam (manufactured by Aldrich) | 10 wt % |
| IRGACURE 907 (manufactured by Ciba Specialty Chemicals) | 15 wt % |
| Benzophenone (manufactured by Tokyo Chemical Industry Co., Ltd.) | 3 wt % |
| Polydimethylsiloxane (manufactured by Aldrich) | 2 wt % |

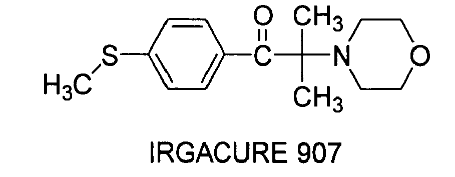

Evaluation of the performance of the solvent-free photocurable coating composition of Example 1 thus obtained was carried out by the following methods.

### Evaluation of surface smoothness (leveling properties)

An electrophotographically printed material obtained using double-sided coated paper output from a DC8000 digital printer manufactured by Fuji Xerox Co., Ltd. was coated on one side with the coating composition at a film thickness of 5 g/m² using an SG610V UV varnish coater manufactured by Shinano Kenshi Co., Ltd., and was subsequently exposed at 120 mJ/cm² with an illumination intensity of 1.0 W/cm², thus giving an overprint sample. The condition of the surface of the coated printed material was visually evaluated in terms of the occurrence of longitudinal lines. The evaluation criteria are shown below.
Excellent: no longitudinal lines.
Good: slight longitudinal lines observed.
Poor: longitudinal lines observed.

### Evaluation of non-tackiness (suppression of surface tackiness)

An electrophotographically printed material obtained using double-sided coated paper output from a DC8000 digital printer manufactured by Fuji Xerox Co., Ltd. was coated on one side with the coating composition at a film thickness of 5 g/m² using a bar coater, and the film coating thus obtained was exposed at 120 mJ/cm² with an illumination intensity of 1.0 W/cm² using an LC8 UV lamp manufactured by Hamamatsu Photonics K.K., thus giving an overprint sample. The non-tackiness after light exposure was evaluated by touch. The evaluation criteria are shown below.
Excellent: no tackiness
Good: almost no tackiness
Fair: slight tackiness
Poor: surface uncured

The result of evaluation by the methods above was that the photocurable coating composition of Example 1 gave 'good' for surface smoothness and 'good' for non-tackiness.

### Examples 2 to 19 and Comparative Examples 1 to 9

Photocurable coating compositions were prepared by the same method as in Example 1 except that the specific alicyclic monomer was changed to a monomer described in Table 1, overprints were then prepared using the compositions, and evaluation of the performance thereof was carried out. The evaluation results are shown together in Table 1.

**(Table 1)**

| | Ethylenically unsaturated compound having alicyclic hydrocarbon group | Surface smoothness (leveling properties) | Non-tackiness (suppression of surface tackiness) |
|---|---|---|---|
| Ex. 1 | B-1 | Excellent | Good |
| Ex. 2 | B-3 | Excellent | Good |
| Ex. 3 | B-15 | Excellent | Good |
| Ex. 4 | B-18 | Excellent | Good |
| Ex. 5 | B-22 | Excellent | Excellent |
| Ex. 6 | B-23 | Excellent | Good |
| Ex. 7 | B-27 | Excellent | Excellent |
| Ex. 8 | B-29 | Excellent | Excellent |
| Ex. 9 | B-30 | Excellent | Excellent |
| Ex. 10 | B-31 | Excellent | Excellent |
| Ex. 11 | b-7 | Excellent | Excellent |
| Ex. 12 | b-8 | Excellent | Excellent |
| Ex. 13 | b-11 | Excellent | Excellent |
| Ex. 14 | b-19 | Excellent | Excellent |
| Ex. 15 | b-21 | Excellent | Excellent |
| Ex. 16 | b-25 | Excellent | Excellent |
| Ex. 17 | b-26 | Excellent | Excellent |
| Ex. 18 | C-9 | Good | Excellent |
| Ex. 19 | C-10 | Good | Excellent |
| Comp. Ex. 1 | Dodecyl acrylate | Excellent | Poor |
| Comp. Ex. 2 | Dodecyl methacrylate | Excellent | Poor |
| Comp. Ex. 3 | Lauryl acrylate | Excellent | Poor |
| Comp. Ex. 4 | Lauryl methacrylate | Excellent | Poor |
| Comp. Ex. 5 | 2-Ethylhexyl acrylate | Excellent | Poor |
| Comp. Ex. 6 | 2-Ethylhexyl methacrylate | Excellent | Poor |
| Comp. Ex. 7 | Ebecryl 605 (bisphenol A diacrylate) (CYTEC SURFACE SPECIALTIES) | Poor | Good |
| Comp. Ex. 8 | OTA-480 (CYTEC SURFACE SPECIALTIES) | Poor | Good |
| Comp. Ex. 9 | BLEMMER PDT-800 (NOF Corp.) | Poor | Good |

In the table, OTA-480 and BLEMMER PDT-800 are compounds having the structures below.

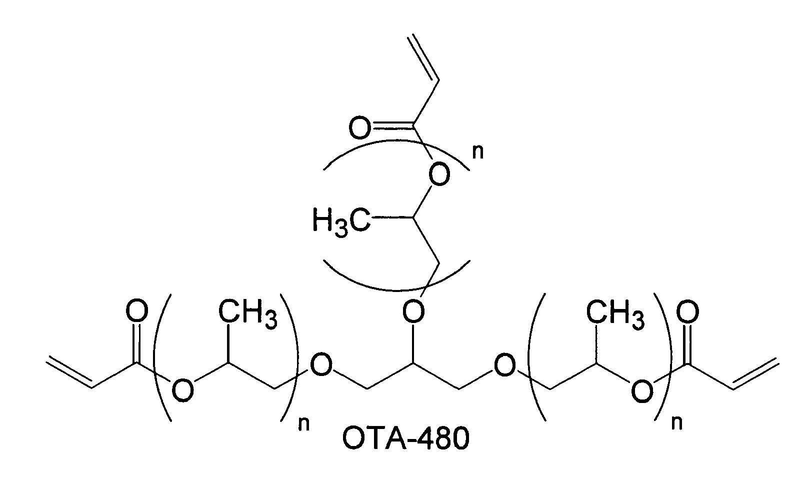

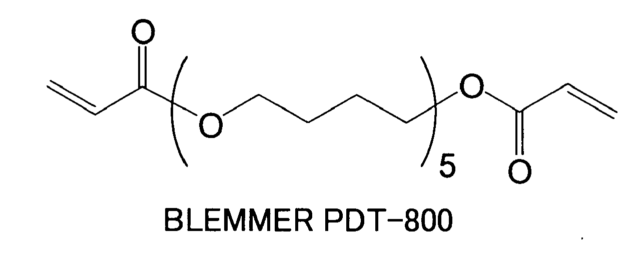

### Example 20

The components below were stirred using a stirrer to give a photocurable coating composition.

| | |
|---|---|
| Ethylenically unsaturated compound having alicyclic hydrocarbon group shown in Table 2 | 30 wt % |
| Tripropylene glycol diacrylate (manufactured by Aldrich) | 20 wt % |
| Lauryl acrylate | 20 wt % |
| Hexanediol diacrylate (manufactured by Aldrich) | 10 wt % |
| IRGACURE 907 (manufactured by Ciba Specialty Chemicals) | 15 wt % |
| Benzophenone (manufactured by Tokyo Chemical Industry Co., Ltd.) | 3 wt % |
| Polydimethylsiloxane (manufactured by Aldrich) | 2 wt % |

Evaluation of the performance of the photocurable coating composition of Example 20 thus obtained and an overprint obtained using the composition was carried out by the same methods as in Example 1. The evaluation results are given in Table 2.

### Examples 21 to 38 and Comparative Examples 10 to 18

Photocurable coating compositions were prepared by the same method as in Example 20 except that the specific alicyclic monomer of the present invention was changed to a monomer described in Table 2, overprints were prepared using the compositions, and evaluation of the performance thereof was carried out. The evaluation results are shown together in Table 2.

**(Table 2)**

| | Ethylenically unsaturated compound having alicyclic hydrocarbon group | Surface smoothness (leveling properties) | Non-tackiness (suppression of surface tackiness) |
|---|---|---|---|
| Ex. 20 | B-1 | Excellent | Fair |
| Ex. 21 | B-3 | Excellent | Fair |
| Ex. 22 | B-15 | Excellent | Fair |
| Ex. 23 | B-18 | Excellent | Fair |
| Ex. 24 | B-22 | Excellent | Good |
| Ex. 25 | B-23 | Excellent | Fair |
| Ex. 26 | B-27 | Excellent | Good |
| Ex. 27 | B-29 | Excellent | Good |
| Ex. 28 | B-30 | Excellent | Good |
| Ex. 29 | B-31 | Excellent | Good |
| Ex. 30 | b-7 | Excellent | Good |
| Ex. 31 | b-8 | Excellent | Good |
| Ex. 32 | b-11 | Excellent | Good |
| Ex. 33 | b-19 | Excellent | Good |
| Ex. 34 | b-21 | Excellent | Good |
| Ex. 35 | b-25 | Excellent | Good |
| Ex. 36 | b-26 | Excellent | Good |
| Ex. 37 | C-9 | Good | Good |
| Ex. 38 | C-10 | Good | Good |
| Comp. Ex. 10 | Dodecyl acrylate | Excellent | Poor |
| Comp. Ex. 11 | Dodecyl methacrylate | Excellent | Poor |
| Comp. Ex. 12 | Lauryl acrylate | Excellent | Poor |
| Comp. Ex. 13 | Lauryl methacrylate | Excellent | Poor |
| Comp. Ex. 14 | 2-Ethylhexyl acrylate | Excellent | Poor |
| Comp. Ex. 15 | 2-Ethylhexyl methacrylate | Excellent | Poor |
| Comp. Ex. 16 | Ebecryl 605 (bisphenol A diacrylate) (CYTEC SURFACE SPECIALTIES) | Poor | Fair |
| Comp. Ex. 17 | OTA-480 (CYTEC SURFACE SPECIALTIES) | Poor | Fair |
| Comp. Ex. 18 | BLEMMER PDT-800 (NOF Corp.) | Poor | Fair |

### Example 39

20 sheets of printed material were prepared by electrophotographically printing full color images, each having a few frames, on both sides of A4 double-sided coated paper (paper weight 100 g/m²), both sides of the printed materials were coated with the photocurable coating compositions prepared in Examples 29 to 31 above by the same method as in Example 1 at a coat weight of 5 g/m², and then irradiated with UV rays, thus giving double-sided overprints. When they were bound to give a photo album together with a cover, a photo album giving the same visibility as that given by a silver halide photographic print was obtained.

### Example 40

10 sheets of printed material were prepared by electrophotographically printing a full color image including a menu photograph and text on both sides of substantially B4 double-sided coated paper (paper weight 100 g/m²), both sides of the printed materials were coated with the photocurable coating compositions prepared in Examples 29 to 31 above by the same method as in Example 1 at a coat weight of 5 g/m² per side, and then irradiated with UV rays, thus giving overprints on both sides. When they were bound to give a restaurant menu, a restaurant menu giving the same visibility as that given by a silver halide photographic print was obtained.

In Examples 1 to 38 above, the amount of overprint layer formed by coating one side of a printing substrate with a photocurable coating composition at a coat weight of 5 g/m² and curing it was 5 g/m² in each case.

Furthermore, the thickness of the overprint layer thus formed was about 5 µm in each case. The thickness of the overprint layer thus formed was measured by examining a cross section of the overprint using an optical microscope.

## Claims

1. A photocurable coating composition comprising:
an ethylenically unsaturated compound having an alicyclic hydrocarbon group; and
a photopolymerization initiator.

2. The photocurable coating composition according to Claim 1, wherein the ethylenically unsaturated compound having an alicyclic hydrocarbon group is a monofunctional (meth)acrylate compound.

3. The photocurable coating composition according to Claim 1 or 2, wherein it comprises a polyfunctional ethylenically unsaturated compound.

4. The photocurable coating composition according to any one of Claims 1 to 3, wherein the alicyclic hydrocarbon group is a bridged cyclic hydrocarbon group.

5. The photocurable coating composition according to any one of Claims 1 to 4, wherein it has substantially no absorption in the visible region.

6. Use of the photocurable coating composition according to any one of Claims 1 to 5 for producing an overprint.

7. Use of the photocurable coating composition according to any one of Claims 1 to 5 for producing an overprint for an electrophotographically printed material.

8. An overprint produced by the process for producing an overprint according to any one of Claims 1 to 5.

9. A process for producing an overprint, the process comprising:
a step of obtaining an electrophotographically printed material by carrying out electrophotographic printing on a printing substrate;
a step of coating the electrophotographically printed material with the photocurable coating composition according to any one of Claims 1 to 5; and
a step of photocuring the photocurable coating composition.

10. The process for producing an overprint according to Claim 9, wherein the amount of cured photocurable coating composition formed on the printed material is 1 to 10 g/m².
